# EUROPEAN PATENT APPLICATION

(11) **EP 3 546 364 A1**
(43) Date of publication of application: **02.10.2019**
(21) Application number: 18305342.0
(22) Date of filing: 28.03.2018
(51) Int. Cl.: B64D 15/12, F01D 25/02, F02C 7/047, B64D 33/02

(54) **DE-ICING APPARATUS**

(71) Applicant: Ratier-Figeac SAS, 46101 Figeac Cedex (FR)
(72) Inventor: CHAUVET, Louis, 31320 Auzeville-Tolosane (FR); PICARD, Pierre-Alex, 46100 Figeac (FR); SEMINEL, Bruno, 46100 Figeac (FR)
(74) Representative: Dehns

(57) **Abstract**

A de-icing apparatus configured to remove ice from a surface part of an aircraft, the de-icing apparatus comprising a heating layer and a conductive surface extending over, and in heat conductive contact with, the heating layer, the conductive surface defining at least a part of the surface part of the aircraft or an aircraft component; the heating layer comprising heating elements (3) defining substantially closed contour zones, each comprising a periphery formed by the heating elements (3) within which an area is defined; the heating layer and the conductive surface configured such that when power is provided to the apparatus the heating elements (3) which fragment ice formed on the surface part of the aircraft according to the shape of the peripheries of the substantially closed contour zones, and wherein on continued application of power, heat from the heating elements (3) then spreads into the areas within the peripheries of the substantially closed contour zones due to conduction of heat from the heating elements (3) through the leading edge (2).

## Description

### TECHNICAL FIELD

The present disclosure is concerned with a de-icing system particularly for de-icing parts, e.g. propellers/rotors, wings, wing flaps, etc., of an aircraft or wind turbine.

### BACKGROUND

In cold conditions, ice is liable to accumulate on the surface of blades of the rotor or propeller, or the wings or other surfaces of an aircraft. This can occur on the ground or in flight. Accumulation of ice on aircraft parts can become a serious problem as the amount of ice can amass too many pounds of weight, thus adversely affecting flight characteristics or causing damage to engines or aircraft structures.

Modern day aircraft are, therefore, equipped with anti-icing systems to prevent the formation of ice and/or with deicing systems to eject accumulated ice from aircraft parts.

WO 2010/049063 and US 2011/0290784 describe de-icing devices comprising a base heating layer permanently supplied with electric current and an additional heating layer supplied with current only during certain periods.

Other anti/de-icing devices use a circulation of hot air below the surface or use electric resistors. Inflatable de-icing devices are also known that cause accumulated ice to break up.

A problem that has been identified with known de-icing systems is that those systems that operate to eject ice from the surface of the aircraft part often eject large, heavy sheets or blocks of ice which can cause damage if they impact with, e.g. other parts of the aircraft or are spun off by the force of the rotors.

US 2017/0174350 describes a de-icing device having two heating layers, one of which defines a pattern of heating elements to fragment the ice before it is discarded. The other heating element then melts the ice sufficient to discard the fragments. This device enables the size of the ejected ice pieces to be controlled, thus minimising damage to other aircraft parts. This de-icing system, however, requires multiple components, weight and bulk to the rotor blades which add to the risk of failure and also add to the maintenance requirements. Power consumption is also relatively high.

The present disclosure seeks to improve on the system of US 2017/0174350 by providing a de-icing system that provides the benefits of the fragmentation of ice prior to ejection whilst overcoming the disadvantages mentioned above.

### SUMMARY

In one aspect, the present disclosure comprises a de-icing apparatus configured to remove ice from a surface part of an aircraft or aircraft component, the de-icing apparatus comprising a heating layer and a conductive surface extending over, and in heat conductive contact with, the heating layer, the conductive surface defining at least a part of the surface part of the aircraft or aircraft component; the heating layer comprising heating elements defining substantially closed contour zones, each comprising a periphery formed by the heating elements within which an area is defined; the heating layer and the conductive surface configured such that when power is provided to the apparatus the heating elements which fragment ice formed on the surface part of the aircraft according to the shape of the peripheries of the substantially closed contour zones, and wherein on continued application of power, heat from the heating elements then spreads into the areas within the peripheries of the substantially closed contour zones due to conduction of heat from the heating elements through the leading edge.

According to another aspect, there is provided an aircraft part on which such a deicing apparatus is mounted.

According to another aspect, there is provided a method of removing ice from a surface part of an aircraft or aircraft component, comprising applying power to a heating layer in conductive contact with the surface part on which ice has formed, the heating layer comprising heating elements defining peripheries of substantially closed contour zones such that the heat in the heating elements causes the ice to fragment according to the shape of the substantially closed contour zones, and continuing to apply power such that heat is conducted from the heating elements into areas within the peripheries of the substantially closed contour zones by conduction through a conductive surface disposed over the heating layer so as to cause the fragmented ice to be ejected from the surface part.

The conductive surface may be made of metal or some other conductive material such as a conductive plastic, and is, in preferred examples, a leading edge.

The heating elements of the heating layer are configured to weaken the adhesion of the ice to the surface part along the closed contour pattern of the heating elements to cause breaking of the ice, depending on the thickness of the ice, allowing the ice to be detached from the surface in fragments shaped by the heating elements. The heating layer does not need to heat the ice through its entire thickness - it just needs to heat the ice sufficiently to weaken it along the closed contour pattern. The heat is then conducted from the heating elements through the conductive surface which heats the area within the closed contours defined by the heating elements, and this weakens the surface connection between the ice layer and the surface part. This combined heating effect allows the ice to be detached from the surface part in fragments rather than as one big sheet or block.

The heating elements are preferably filar, e.g. in the form of wires formed into the closed contour pattern. The zones can be completely closed or could be "almost" closed - e.g. formed of two wires not quite touching at their ends. This latter option avoids accumulation of currents and creation of hot spots. Hereinafter, the term "closed contour" will be taken to include fully closed and almost closed contours.

The heating elements can be formed directly on the conductive surface or can be formed as a separate layer spaced apart therefrom.

The closed contour zones can be any desired shape or pattern, regular, irregular, straight or curved, etc. some examples are polygons; squares, triangles, pentagons, hexagons, octagons etc., or circles, ellipses etc. The shape of the pattern can be different depending on the area (different accretion rate and different aerodynamic loads) in order to optimize the electrical consumption.

The heating layer may be provided with an electric power source or a connector for connecting to a power source.

### BRIEF DESCRIPTION OF THE DRAWINGS

Preferred embodiments will now be described by way of example, with reference to the drawings.
Fig. 1 shows a schematic view of a de-icing apparatus according to this disclosure at an initial heating stage;
Fig. 2 is a top view of an example heating layer in the first heating stage;
Fig. 3 shows a schematic view of the de-icing apparatus of Fig. 1 at an advanced heating stage; and
Fig. 4 shows the heating layer of Fig. 2 in the advanced heating stage.

### DETAILED DESCRIPTION

With reference to the figures, a de-icing heating layer 1 is provided on or close to the surface part from which ice is to be removed. A leading edge 2 is provided on the aircraft part essentially for protection of the de-icing apparatus against e.g. rain and sand erosion and damage from foreign objects. In one embodiment, this leading edge forms a second component of the de-icing apparatus although other conductive surfaces may be used. The leading edge or other conductive surface is made of a heat conductive material e.g. metal or conductive plastic.

Some examples for the leading edge material are metals or alloys such as titanium, InOx, Ni and Ni alloys. Alternative materials may include semi-crystalline high performances thermoplastics such as PAEK (Polyaryletherketone) family, PEEK (PolyEtherEtherKetone), PEKK (PolyEtherKetoneKetone), or PEI (PolyEhterlmide) with fillers such as carbon black (powder) / graphene / carbon nanotubes, or polymers such as polyimide with fillers such as carbon black (powder) / graphene / carbon nanotubes.

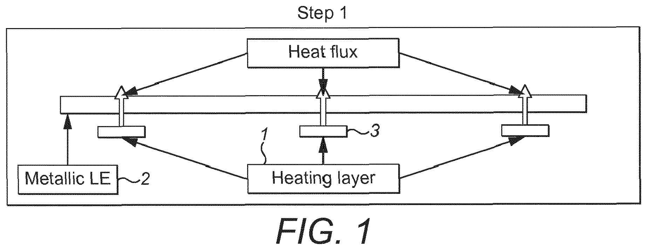

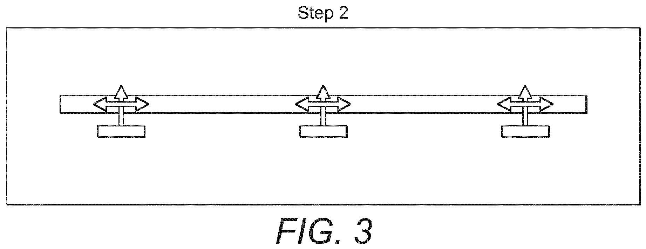

The heating layer 1 is located below the leading edge 2 as seen in Figs. 1 and 3 and is in heat conductive contact therewith. The heating layer 1 may be formed directly onto a lower surface of the leading edge 2 or may be formed as a separate layer and attached, directly or indirectly, to the lower surface of the leading edge.

Some possible heating layer architectures include coated electrical wire (electrical insulation provided by the coating) in contact with the leading edge (via adhesive), bare electrical wire embedded in an insulating material that can be rubber, composite, teflon, silicone etc. or metal foil of any material embedded in an insulating material that can be rubber, composite, teflon, silicone etc.

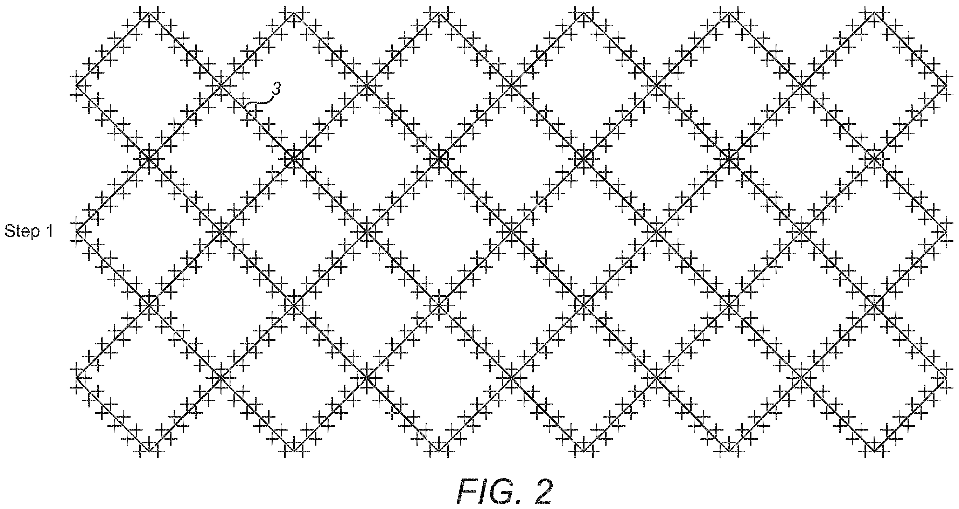

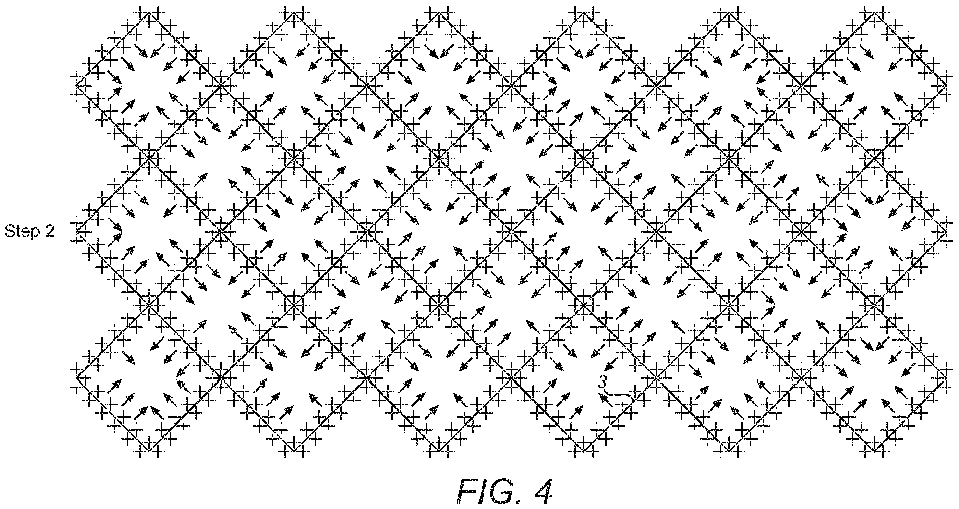

As can best be seen in Figs. 2 and 4, the heating layer comprises a pattern, e.g. a lattice or network, of closed contour zones defined by the heating elements 3. As mentioned above, these zones can take any form or shape. The aim of this layer and the zones defined by the heating elements is to fragment the ice according to the defined pattern when power is applied to the heating elements. The heating elements form the peripheries of the zones, the peripheries each defining a zone area therewithin.

When power is applied (e.g. 0,5 to 5 W/cm²) to the de-icer, in an initial heating stage, the heat (indicated here by crosses) travels through the heating elements in the defined pattern to fragment the ice - i.e. to weaken the ice in the pattern of the zone peripheries defined by the heating elements. This stage can be seen in Figs. 1 and 2. The peripheries are thus heated sufficient to break the ice where the peripheries are formed but the ice within the peripheries still adheres to the surface.

Because the leading edge is conductive, as power continues to be applied (e.g. over 5 to 120 seconds), in an advanced heating stage, the heat is conducted (indicated by arrows) across or through the leading edge materials (Fig. 3) thus extending into the areas within the closed contour zones (Fig. 4). When the ice inside the closed contour zones has a sufficiently high temperature to weaken its adhesion to the surface part it will be discarded from the surface but will break into fragments due to the lines of weakness from the greater heating effect of the heating elements.

The fragmentation effect can be further enhanced by etching the leading edge where it covers the pattern defined by the heating elements.

Heating efficiency can be optimised according to flight conditions by varying the power applied or the length of time the power is applied, for example.

The de-icing apparatus of this disclosure thus retains the benefits of the system of US 2017/0174350 but only requires one heating layer and uses the conductive properties of the surface, which will be present anyway to protect or support the de-icer. Power consumption of the de-icer is also expected to be less.

## Claims

1. A de-icing apparatus configured to remove ice from a surface part of an aircraft or aircraft component, the de-icing apparatus comprising a heating layer and a conductive surface extending over, and in heat conductive contact with, the heating layer, the conductive surface defining at least a part of the surface part of the aircraft or aircraft component;
the heating layer comprising heating elements defining substantially closed contour zones, each comprising a periphery formed by the heating elements within which an area is defined; the heating layer and the conductive surface configured such that when power is provided to the apparatus the heating elements fragment ice formed on the surface part of the aircraft according to the shape of the peripheries of the substantially closed contour zones, and wherein on continued application of power, heat from the heating elements then spreads into the areas within the peripheries of the substantially closed contour zones due to conduction of heat from the heating elements through the conductive surface.

2. The apparatus of claim 1, wherein the conductive surface comprises metal.

3. The apparatus of claim 1, wherein the conductive surface comprises conductive plastic.

4. The apparatus of any preceding claim, wherein the heating layer is formed directly on the conductive surface.

5. The apparatus of any preceding claim, wherein the heating layer is formed as a separate layer in contact with the conductive surface.

6. The apparatus of any preceding claim, wherein the heating elements are in the form of wires formed into a pattern of substantially closed contour zones.

7. The apparatus of claim 6, wherein the substantially closed contour zones are formed of wires that do not join to form a completely closed contour zone periphery.

8. The apparatus of any preceding claim, wherein the heating layer is provided with an electric power source or a connector for connecting to a power source.

9. The apparatus of any preceding claim, wherein the conductive surface is a leading edge on the surface part.

10. An aircraft part on which is mounted a de-icing apparatus as claimed in any preceding claim.

11. A method of removing ice from a surface part of an aircraft, comprising applying power to a heating layer in conductive contact with the surface part on which ice has formed, the heating layer comprising heating elements defining peripheries of substantially closed contour zones such that the heat in the heating elements causes the ice to fragment according to the shape of the substantially closed contour zones, and continuing to apply power such that heat is conducted from the heating elements into areas within the peripheries of the substantially closed contour zones by conduction through a conductive surface disposed over the heating layer so as to cause the fragmented ice to be ejected from the surface part.
